**Europäisches Patentamt**

**European Patent Office**

**Office européen des brevets**

(11) Veröffentlichungsnummer: **0 263 060**
**A1**

## (12) EUROPÄISCHE PATENTANMELDUNG

(21) Anmeldenummer: **87730115.0**

(22) Anmeldetag: **29.09.87**

(51) Int. Cl.⁴: **H 02 P 7/62**
H 02 P 7/40

(30) Priorität: **03.10.86 DE 3634184**

(43) Veröffentlichungstag der Anmeldung:
**06.04.88 Patentblatt 88/14**

(84) Benannte Vertragsstaaten:
**AT BE CH DE FR GB IT LI NL SE**

(71) Anmelder: **Siemens Aktiengesellschaft Berlin und
München**
**Wittelsbacherplatz 2**
**D-8000 München 2 (DE)**

(72) Erfinder: **Leitgeb, Wilhelm, Dr.
Hackerstrasse 23
D-1000 Berlin 41 (DE)**

(54) **Pulsumrichtergespeiste elektrische Asynchronmaschine mit Kurzschlussläufer.**

㉗ Eine elektrische Asynchronmaschine mit Kurzschlußläufer hat als Ständerwicklung eine Mehrphasenwicklung, deren Phasenzahl größer als drei, mindestens ein Mehrfaches davon, ist. Die Mehrphasenwicklung ist als offene Wicklung ausgebildet, und jede Phase (1, 2, 3 bis n) ist für sich an einen Wechselrichter (4) mit abschaltbaren Halbleiterelementen (5) gelegt. Die Gleichstromseiten (7, 8) aller Brücken sind gemeinsam mit einer Gleichspannungsquelle verbunden, z. B. dem Gleichspannungszwischenkreis eines Pulsumrichters. Die Speisung der Mehrphasenwicklung ist so gewählt, daß der zeitliche Verlauf der Phasenströme und/oder der räumliche Verlauf des Ständerstrombelages sowie der Luftspaltinduktion angenähert rechteckförmig ist. Dabei ist die Längsseite des Rechtecks angenähert gleich der halben Periodendauer bzw. der Polteilung, und die Höhe entspricht der Sperrspannung der Halbleiterelemente (5).

EP 0 263 060 A1

## Beschreibung

Pulsumrichtergespeiste elektrische Asynchronmaschine mit Kurzschlußläufer

Die Erfindung bezieht sich auf eine pulsumrichtergespeiste elekterische Asynchronmaschine mit Kurzschlußläufer, deren Ständerwicklung aus einer Mehrphasenwicklung besteht, von der jede Phase für sich an einen Wechselrichter mit abschaltbaren Halbleiterelementen gelegt ist, wobei die Gleichstromseiten aller Brücken gemeinsam mit einer Gleichspannungsquelle verbunden sind.

Ein derartiger dreiphasiger Asynchronmotor mit Kurzschlußläufer ist aus der Zeitschrift "Siemens Energie & Automation Produktinformation" 1985, Seiten 58 bis 60, bekannt. Dieser Asynchronmotor ist über einen Transistorpulsumrichter gespeist, dessen Leistungsteil aus einem rückspeisefähigen Netzstromrichter mit Hochsetzsteller, einem Gleichspannungszwischenkreis und einem Transistorpulsumrichter besteht. Der Netzstromrichter, der unmittelbar ans Drehstromnetz angeschlossen ist, und der Hochsetzsteller regeln die Zwischenkreisgleichspannung des Pulsumrichters auf einen konstanten Wert. Jede Phase der dreiphasigen Ständerwicklung des Asynchronmotors ist für sich an einen Wechselrichter in Brückenschaltung mit abschaltbaren Halbleiterelementen gelegt, wobei die Gleichstromseiten der Brücken gemeinsam mit dem Gleichspannungszwischenkreis verbunden sind. Der Asynchronmotor wird so geregelt, daß er das Last- und Führungsverhalten einer Gleichstrommaschine erreicht.

Der Betrieb des bekannten dreiphasigen Asynchronmotors am Drehstromnetz erfolgt mit angenähert sinusförmigem Verlauf von Strom und Klemmenspannung. Dabei ergeben sich in der Maschine mit guter Näherung räumlich sinusförmige Verläufe für Luftspaltinduktion und Strombelag. Durch die angenähert sinusförmige Speisung des Asynchronmotors werden aber weder die Asynchronmaschine noch die Halbleiterelemente des Umrichters optimal ausgenutzt.

Der Erfindung liegt daher die Aufgabe zugrunde, die Ausnutzung einer pulsumrichtergespeisten elektrischen Asynchronmaschine mit Kurzschlußläufer zu optimieren und dadurch zu verbessern.

Zur Lösung dieser Aufgabe ist gemäß der Erfindung bei einer pulsumrichtergespeisten elektrischen Asynchronmaschine der eingangs beschriebenen Art die Phasenzahl der Mehrphasenwicklung größer als drei, beträgt mindestens ein Mehrfaches davon und der zeitliche Verlauf der Phasenströme und/oder der räumliche Verlauf des Ständerstrombelages sowie der Luftspaltinduktion ist angenähert rechteckförmig, wobei die Längsseite des Rechtecks angenähert gleich der halben Periodendauer bzw. der Polteilung ist.

Bei einer derartigen mit rechteckförmigen Strömen gespeisten Asynchronmaschine mit hoher Phasenzahl der Ständerwicklung können die Kupferverluste in der gleichen Wicklung bei gleichem Drehmoment und gleicher Luftspaltinduktionsamplitude gegenüber einer sinusförmigen Speisung im theoretischen Grenzfall halbiert werden, bzw. das Drehmoment kann bei gleichen Kupferverlusten um den Faktor 2 gesteigert werden. Da außerdem durch die Speisung mit rechteckförmigen Strömen die Sperrspannung der Halbleiterelemente des Umrichters über der halten Periodendauer bzw. der Polteilung optimal ausgenutzt werden kann, würde der Aufwand für den Leistungsteil bei einem Pulswechselrichter mit offener Ständerwicklung halbiert und im Vergleich zu einer Drehstrombrückenschaltung mit sinus förmigen Speiseströmen um den Faktor 3 verkleinert. Es empfiehlt sich daher, daß die Zwischenkreisgleichspannung der Sperrspannung der Halbleiterelemente des Pulsumrichters entspricht.

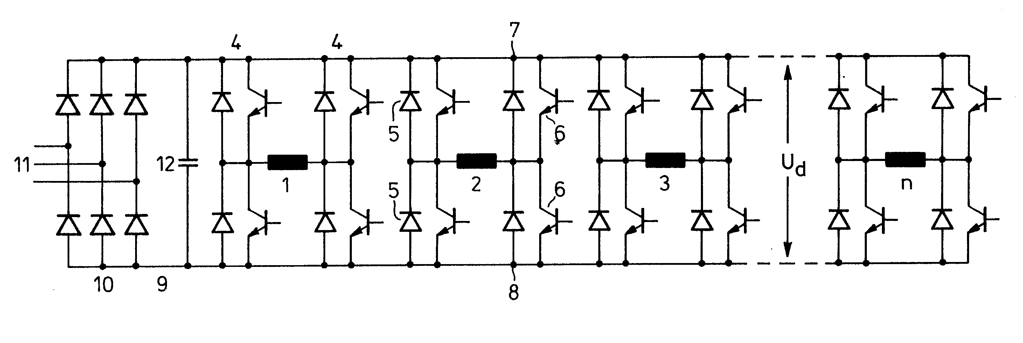

Im folgenden sei die Erfindung noch anhand des in der Figur der Zeichnung dargestellten Schaltbildes näher erläutert. Diese zeigt die Schaltung der Ständerwicklung einer gemäß der Erfindung ausgebildeten Asynchronmaschine mit Kurzschlußläufer.

Die Asynchronmaschine hat eine mehrphasige, als offene Wicklung ausgebildete Ständerwicklung mit großer Phasenzahl 1 bis n, wobei n mindestens des Zweifache von drei, also sechs, beträgt. Die einzelnen Phasen 1, 2, 3 bis n sind jeweils mit ihren Ein- und Ausgängen an einen Wechselrichter 4 in Brückenschaltung gelegt, dessen Halbleiterelement 5 über GTO-Thyristoren 6 abschaltbar sind. Alle Ausgangsklemmen der Gleichspannungsseiten 7 bzw. 8 des Wechselrichters 4 sind untereinander verbunden und liegen an dem Gleichspannungszwischenkreis 9 mit der Gleichspannung $U_d$. Dieser Gleichspannungszwischenkreis 9 wird über einen Netzstromrichter 10 aus dem Drehstromnetz 11 gespeist. Im Gleichspannungszwischenkreis 9 ist außerdem der Kondensator 12 vorgesehen, der verhindert, daß beim Ausschalten der Halbleiterelemente 5 Überspannungen auftreten können.

Die Speisung der Ständerwicklung der Asynchronmaschine ist so geregelt, daß der zeitliche Verlauf der Phasenströme bzw. der räumliche Verlauf des Ständerstrombelages sowie der Luftspaltinduktion angenähert rechteckförmig ist, wobei die Längsseite des Rechtecks angenähert gleich der halben Periodendauer bzw. der Polteilung ist und die Höhe, d. h. die Zwischenkreisgleichspannung $U_d$ der Sperrspannung der Halbleiterelemente 5 entspricht.

## Patentansprüche

1. Pulsumrichtergespeiste elektrische Asynchronmaschine mit Kurzschlußläufer, deren Ständerwicklung aus einer Mehrphasenwicklung besteht, von der jede Phase für sich an einen Wechselrichter mit abschaltbaren Halbleiterelementen gelegt ist, wobei die Gleichstromseiten aller Brücken gemeinsam mit einer Gleichspannungsquelle verbunden sind, **dadurch gekennzeichnet,** daß die Phasenzahl der Mehrphasenwicklung (1, 2, 3 ... n) größer als drei ist, mindestens ein Mehrfaches davon beträgt und daß der zeitliche Verlauf der Phasenströme und/oder der räumliche Verlauf des Ständerstrombelages sowie der Luftspaltinduktion angenähert rechteckförmig ist, wobei die Längsseite des Rechtecks annähernd gleich der halben Periodendauer bzw. der Polteilung ist.

2. Stromrichtergespeiste elektrische Maschine nach Anspruch 1, **dadurch gekennzeichnet,** daß der Gleichspannungszwischenkreis eines dreiphasigen Stromrichters (10) als Gleichspannungsquelle ($U_d$) dient.

3. Stromrichtergespeiste elektrische Maschine nach Anspruch 2, **dadurch gekennzeichnet,** daß die Zwischenkreisgleichspannung ($U_d$) der Sperrspannung der Halbleiterelemente (5) entspricht.

4. Stromrichtergespeiste elektische Maschine nach Anspruch 1 oder 2 oder 3, **dadurch gekennzeichnet,** daß der Wechselrichter (4) eine Brückenschaltung aufweist.

0263060

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 732 788 (FLAKO AG) * Seite 6, Zeilen 14-19; Ansprüche 1,2,5 * --- | 1,4 | H 02 P 7/62 H 02 P 7/40 |
| A | WO-A-8 300 851 (GOULD INC.) * Zusammenfassung; Seite 3, Zeilen 25-29; Figuren 2,4 * --- | 1 | |
| A | FR-A-2 210 334 (BRONZAVIA) * Ansprüche 1,2; Figur 1 * --- | 1 | |
| A | EP-A-0 154 312 (HITACHI KEIYO ENGINEERING CO. LTD) * Figur 1; Seite 5, Zeile 16 – Seite 6, Zeile 5 * ------ | 1 | |

RECHERCHIERTE SACHGEBIETE (Int. Cl.4)

H 02 P

Der vorliegende Recherchenbericht wurde für alle Patentansprüche erstellt

| Recherchenort | Abschlußdatum der Recherche | Prüfer |
|---|---|---|
| DEN HAAG | 11-12-1987 | CLEARY F.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................
& : Mitglied der gleichen Patentfamilie, übereinstimmendes Dokument